# EUROPEAN PATENT APPLICATION

(11) **EP 4 418 496 A1**
(43) Date of publication of application: **21.08.2024**
(21) Application number: 22931782.1
(22) Date of filing: 09.11.2022
(51) Int. Cl.: H02K 1/27

(54) **ROTOR STRUCTURE AND FORMING METHOD THEREFOR, AND ELECTRIC MOTOR STRUCTURE**

(30) Priority: 16.03.2022 CN 202210260263
(71) Applicant: Zhejiang Founder Motor Co., Ltd, Lishui, Zhejiang 323010 (CN)
(72) Inventor: LI, Liangzi, Lishui, Zhejiang 323010 (CN)
(74) Representative: Müller Schupfner & Partner Patent- und Rechtsanwaltspartnerschaft mbB (Muc)
(86) International application number: PCT/CN2022/130806
(87) International publication number: WO 2023/173769

(57) **Abstract**

Provided are a rotor structure and a forming method therefor, and an electric motor structure. In the forming method for a rotor structure, an ideal sinusoidal air gap magnetic field wave is divided into N sections. When the center line of a toothed part (101) is within a corresponding divided part of the sinusoidal air gap magnetic field wave, since the area of the toothed part (101) is equal to the area of the corresponding divided part of the ideal sinusoidal air gap magnetic field wave, during the process of high-speed operation of an electric motor, an air gap magnetic field harmonic, which is approximate to the ideal sinusoidal air gap magnetic field wave, is formed by utilizing the principle of pulse width modulation simulation, such that a component of the air gap magnetic field harmonic is reduced, an alternating-current loss of a winding and an eddy-current loss of magnetic steel during the high-speed operation of the electric motor are reduced, and vibrations and noise of the electric motor that are produced by a harmonic magnetic field are reduced. The method has a relatively wide application range.

## Description

### CROSS-REFERENCE TO RELATED APPLICATIONS

This application claims the benefit of priority to Chinese patent application No. 202210260263.0, filed on March 16, 2022, entitled "Rotor structure and forming method therefor, and electric motor structure", the entire disclosures of which are incorporated herein by reference.

### TECHNICAL FIELD

The present disclosure relates to the field of automotive manufacturing technology, and more particularly to a rotor structure, a method for forming the rotor structure and an electric motor structure.

### BACKGROUND

New energy vehicles require high motor power and high torque to achieve good starting acceleration or climbing ability and high vehicle speed. Further, due to limited space and strict weight requirements of passenger cars, high torque and power density are also a must for a motor. Nowadays, permanent magnet synchronous motor (PMSM) is widely used in the new energy vehicles due to its excellent speed regulation ability and high torque density. In recent years, with continuous iteration of new energy vehicle electric drive technology, requirements for the highest speed and torque power density of the motor have also increased. Due to the presence of a large amount of harmonic components in an air gap magnetic field, a relative movement between permanent magnets and the air gap magnetic field occurs when the rotor rotates, which can result in eddy current losses in the permanent magnets, and even cause irreversible demagnetization of the permanent magnets.

At present, new energy motor manufacturers are actively developing stator flat copper wire winding technology, which can effectively improve a temperature on a stator side of the motor. However, with the trend of high-speed development, the flat copper wire winding generally adopts full pitch winding, which may generate significant alternating current loss during a high-speed operation of the motor under the action of air gap magnetic field harmonics.

Therefore, how to effectively reduce the harmonic components of the rotor air gap magnetic field and reduce alternating current losses of windings and eddy current losses of magnets during the high-speed operation of the motor is currently an urgent technical problem that needs to be solved.

### SUMMARY

An objective of the present disclosure is to provide a method for forming a rotor structure. An ideal sinusoidal air gap magnetic field wave is divided into N segments. When a center line of a tooth portion of a plurality of tooth portions is in a corresponding segment of the ideal sinusoidal air-gap magnetic field wave, an area of the tooth portion is equal to an area of the corresponding segment of the ideal sinusoidal air gap magnetic field wave. Thus, during an operation of a motor, air gap magnetic field harmonics close to the ideal sinusoidal air gap magnetic field wave are formed using the principle of analog pulse width modulation, which can reduce harmonic components of the air gap magnetic field, and reduce AC losses of windings and eddy current losses of magnets during a high-speed operation of the motor, thereby achieving a wide range of applications.

An embodiment of the present disclosure provides a method for forming a rotor structure. The methods includes: providing a plurality of magnet units, wherein each of the plurality of magnet units includes a magnet component having a plurality of tooth portions; and dividing an ideal sinusoidal air-gap magnetic field wave into N segments, wherein when a center line of a tooth portion of the plurality of tooth portions is in a corresponding segment of the ideal sinusoidal air-gap magnetic field wave, an area of the tooth portion is equal to an area of the corresponding segment of the ideal sinusoidal air gap magnetic field wave.

According to some embodiments, the magnet component further includes a plurality of grooves respectively arranged between two adjacent tooth portions, and the plurality of grooves are symmetrically arranged relative to an axis d of a rotor.

According to some embodiments, a width of the tooth portion decreases as a distance between the tooth portion and an axis d of a rotor increases in a circumferential direction of the rotor.

According to some embodiments, the magnet component further includes a yoke portion, and one end of each of the plurality of tooth portions is connected with the yoke portion.

According to some embodiments, when a center line of a groove of the plurality of grooves is in a corresponding segment of the ideal sinusoidal air-gap magnetic field wave, a sum of the area of the tooth portion and an area of a corresponding portion of the yoke portion is equal to the area of the corresponding segment of the ideal sinusoidal air gap magnetic field wave.

According to some embodiments, N is equal to a number of the plurality of tooth portions.

Another embodiment of the present disclosure provides a rotor structure. The rotor structure is formed by the method according to any one of the preceding embodiments.

According to some embodiments, the rotor structure further includes a rotor punching sheet, and the plurality of magnet units are arranged on the rotor punching sheet.

According to some embodiments, the magnet component is a line-shaped magnet component or a V-shaped magnet component.

Another embodiment of the present disclosure provides a motor structure. The motor structure includes a rotor structure according to any one of the preceding embodiments.

The embodiments of the present disclosure have following beneficial effects:

In the method for forming a rotor structure, the ideal sinusoidal air gap magnetic field wave is divided into N segments. When the center line of a tooth portion of a plurality of tooth portions is in a corresponding segment of the ideal sinusoidal air-gap magnetic field wave, the area of the tooth portion is equal to the area of the corresponding segment of the ideal sinusoidal air gap magnetic field wave. Thus, during an operation of a motor, air gap magnetic field harmonics close to the ideal sinusoidal air gap magnetic field wave are formed using the principle of analog pulse width modulation, which can reduce harmonic components of the air gap magnetic field, reduce AC losses of windings and eddy current losses of magnets during a high-speed operation of the motor, and reduce motor vibration and noise caused by harmonic magnetic field, thereby achieving a wide range of applications.

### BRIEF DESCRIPTION OF THE DRAWINGS

FIG. 1 illustrates a schematic structural view of a magnet component according to an embodiment of the present disclosure.
FIG. 2 illustrates a schematic structural view of a magnet component according to another embodiment of the present disclosure.
FIG. 3 is a schematic analysis view of a method for forming a rotor structure of the present disclosure.
FIG. 4 illustrates a schematic structural view of a magnet component according to yet another embodiment of the present disclosure.
FIG. 5 illustrates a schematic structural view of a magnet component according to still another embodiment of the present disclosure.

### DETAILED DESCRIPTION

For high-speed permanent magnet motors, in order to reduce eddy current losses of magnets and AC losses of windings, one method is to provide step skewing of magnets to effectively reduce harmonic components of a rotor magnetic field and reduce eddy current losses. However, the effect is limited and the process requirements are high. Another method is to provide short pitch windings to reduce the harmonic components of a stator magnetic field to reduce the AC losses of the windings. However, the short pitch windings can cause insulation problems in slots. As the air gap magnetic field is composed of both the stator and rotor magnetic fields, the short pitch windings can reduce the harmonic components of the stator magnetic field. However, due to the presence of rotor magnetic field harmonics, the reduction of AC losses of the windings is still limited.

By dividing an ideal sinusoidal air gap magnetic field wave into N segments, when the center line of a tooth portion of a plurality of tooth portions is in a corresponding segment of the ideal sinusoidal air-gap magnetic field wave, the area of the tooth portion is equal to the area of the corresponding segment of the ideal sinusoidal air gap magnetic field wave. Thus, during an operation of a motor, air gap magnetic field harmonics close to the ideal sinusoidal air gap magnetic field wave are formed using the principle of analog pulse width modulation, which can reduce harmonic components of the air gap magnetic field, reduce AC losses of windings and eddy current losses of magnets during the high-speed operation of the motor, and reduce motor vibration and noise caused by harmonic magnetic field, thereby achieving a wide range of applications.

In order to make above objectives, features, and advantages of the present disclosure understandable, a detailed explanation of specific embodiments of the present disclosure will be described below in conjunction with the accompanying drawings.

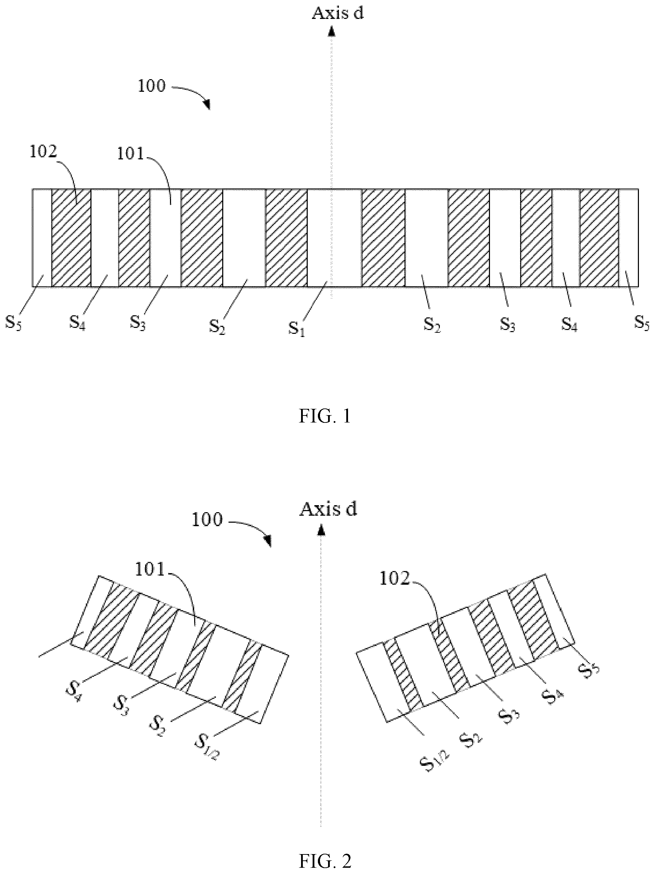

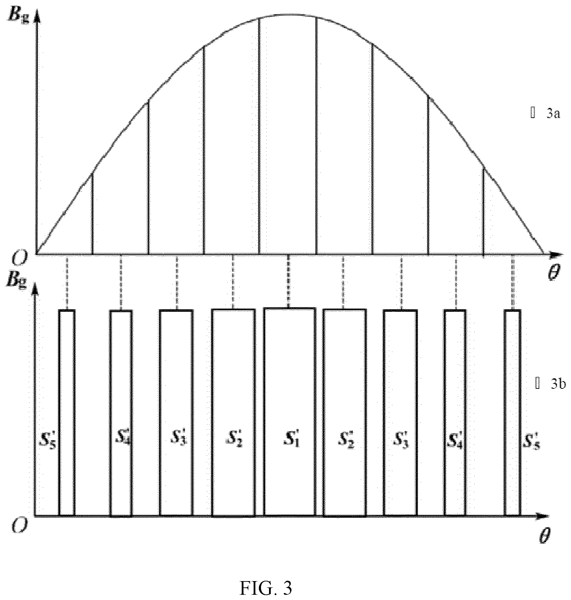

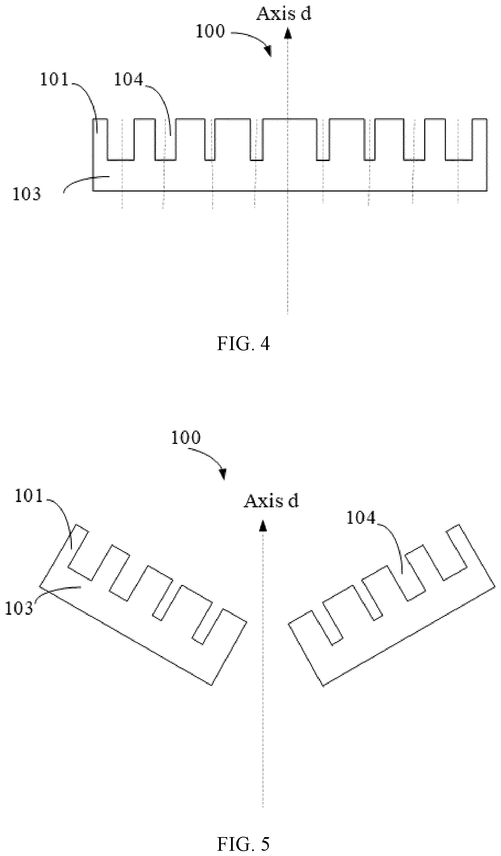

FIG. 1 illustrates a schematic structural view of a magnet component according to an embodiment of the present disclosure. FIG. 2 illustrates a schematic structural view of a magnet component according to another embodiment of the present disclosure. FIG. 3 is a schematic analysis view of a method for forming a rotor structure of the present disclosure. FIG. 4 illustrates a schematic structural view of a magnet component according to yet another embodiment of the present disclosure. FIG. 5 illustrates a schematic structural view of a magnet component according to still another embodiment of the present disclosure.

Firstly, referring to FIG. 1, a magnet component 100 includes a plurality of tooth portions 101.

In some embodiments, each tooth portion 101 is a separate member.

In some embodiments, two adjacent tooth portions 101 are connected by an adhesive 102.

In some embodiments, the plurality of tooth portions 101 constitute the magnet component 100.

Still referring to FIG. 1, the magnet component 100 is a line-shaped magnet component.

In other embodiments, referring to FIG. 2, the magnet component 100 may also be a V-shaped magnet component. The V-shaped magnet component may include two magnet components 100 distributed in a V-shaped arrangement.

In some embodiments, referring to FIG. 3, an ideal sinusoidal air-gap magnetic field wave is divided into N segments. When a center line of a tooth portion 101 of the plurality of tooth portions is in a corresponding segment of the ideal sinusoidal air-gap magnetic field wave, an area of the tooth portion 101 is equal to an area of the corresponding segment of the ideal sinusoidal air gap magnetic field wave.

In some embodiments, a half-cycle sinusoidal air gap magnetic field wave is taken as an example for explanation.

Due to the generation of fundamental waves and harmonic magnetomotive forces during the operation of the motor, such as the air gap magnetic field waves, the ideal air gap magnetic field wave may be a sine waveform, and the ideal sine air gap magnetic field wave has a smaller harmonic component, which can reduce vibrations and noises of the motor and reduce losses of the motor. Therefore, in the process of designing a rotor structure, an ideal air gap magnetic field wave is needed for solving the problems of noise, vibration and losses during the operation of the motor.

In the method for forming the rotor structure, the ideal sinusoidal air gap magnetic field wave is divided into N segments. When the center line of the tooth portion 101 of the plurality of tooth portions is in a corresponding segment of the ideal sinusoidal air-gap magnetic field wave, the area of the tooth portion 101 is equal to the area of the corresponding segment of the ideal sinusoidal air gap magnetic field wave. Thus, during an operation of a motor, air gap magnetic field harmonics close to the ideal sinusoidal air gap magnetic field wave are formed using the principle of analog pulse width modulation, which can reduce harmonic components of the air gap magnetic field, reduce AC losses of windings and eddy current losses of magnets during the high-speed operation of the motor, and reduce motor vibrations and noises caused by harmonic magnetic field, thereby achieving a wide range of applications.

In some embodiments, FIG. 3 includes FIG. 3a and FIG. 3b. FIG. 3a illustrates a waveform of an ideal sinusoidal air gap magnetic field within a half cycle, and FIG. 3b illustrates an equal number of rectangular pulse sequences with equal amplitude but different widths.

The area of each rectangular pulse in FIG. 3b is equal to the area of a corresponding segment of the ideal sinusoidal air gap magnetic field wave.

Thus, an equal number of rectangular pulse sequences with equal amplitude but different widths are used to replace sine waves, and the width and interval of each pulse are calculated. These data are stored in a microcomputer, and PWM signals are generated through lookup table to control the on/off of switch devices, thus the on/off time of each switch device can be accurately calculated, and a resulting waveform is very close to sine waves.

In FIG.3b, Si' represents the area of a rectangular pulse, and i=N.

In FIG.3b, the area of Si' is equal to the area of a corresponding tooth portion 101.

In some embodiments, N is equal to the number of tooth portions 101. Taking a half-cycle ideal sinusoidal air gap magnetic field wave as an example, N is 9 and the number of tooth portions 101 is 9.

Specifically, if the ideal sinusoidal air gap magnetic field wave is divided into nine segments, nine tooth portions are symmetrically arranged relative to an axis d. Referring to FIG. 1, the area of the rectangular pulses is S5', S4', S3', S2', S1', S2', S3', S4' and S5', and the area of the tooth portions of the magnet component 100 is S5, S4, S3, S2, S1, S2, S3, S4 and S5 correspondingly, where S5'=S5, S4 '=S4, S3'=S3, S2 '=S2 and S1'=S1.

In other embodiments, the magnet component 100 may also be a V-shaped magnet competent. The magnet component 100 is divided into nine segments, and the area S1 of the tooth portion 101 closest to both sides of the axis d is divided in half, i.e. S1=S_{1/2}+S_{1/2}. Taking the axis d as a symmetric axis, the area of the tooth portions of the magnet component 100 is S5, S4, S3, S2, S1/2, S1/2, S2, S3, S4 and S5.

In some embodiments, the center line of the tooth portion 101 coincides with the center line of the corresponding segment of the ideal sinusoidal air gap magnetic field wave.

Referring to FIG. 4, the magnet component 100 further includes a yoke portion 103, and one end of each of the plurality of tooth portions 101 is connected with the yoke portion 103.

In some embodiments, when the magnet component 100 includes the yoke portion 103, adjacent tooth portions 101 are not connected through the adhesive 102.

In some embodiments, grooves 104 are formed between adjacent tooth portions 101 respectively, and the grooves 104 are symmetrically arranged relative to the axis d of the rotor.

Still referring to FIG. 4, the magnet component 100 is a line-shaped magnet component.

A dashed line in each groove in FIG. 4 represents a center line of the groove.

In other embodiments, referring to FIG.5, the magnet component 100 is a V-shaped magnet component.

In some embodiments, a width of the tooth portions 101 decreases in a circumferential direction of the rotor as the distance between the tooth portions 101 and the axis d of the rotor increases.

In some embodiments, the grooves 104 are formed between adjacent tooth portions 101, which can ensure the performance of the motor and reduce the amount of the magnet so as to reduce costs while ensuring the performance of the magnet component. Moreover, due to a lightweight design of the magnet component, the eddy current losses of the magnet unit can be further reduced, the heat source can be reduced and the working efficiency of the motor can be improved.

In some embodiments, when a center line of a groove is in a corresponding segment of the ideal sinusoidal air-gap magnetic field wave, a sum of the area of the tooth portion and an area of a corresponding portion of the yoke portion is equal to the area of the corresponding segment of the ideal sinusoidal air gap magnetic field wave.

In some embodiments, a plurality of magnet components constitute a magnet unit, and a plurality of magnet units are arranged on a rotor punching sheet to form a rotor structure.

Another embodiment of the present disclosure provides a rotor structure including the magnet component 100. The area of the tooth portion 101 is equal to the area of the corresponding segment of the ideal sinusoidal air gap magnetic field wave, or the sum of the area of the tooth portion and the area of the corresponding portion of the yoke portion is equal to the area of the corresponding segment of the ideal sinusoidal air gap magnetic field wave. Moreover, air gap magnetic field harmonics close to the ideal sinusoidal air gap magnetic field wave are formed using the principle of analog pulse width modulation, which can reduce harmonic components of the air gap magnetic field, reduce AC losses of windings and eddy current losses of magnets during a high-speed operation of the motor, and reduce motor vibrations and noises caused by harmonic magnetic field, thereby achieving a wide range of applications of the rotor structure.

Another embodiment of the present disclosure further provides a motor structure including the rotor structure. Due to the elimination of the harmonic components of the air gap magnetic field during the process of designing the rotor structure, the influence of motor vibrations and noises caused by the harmonic components of the air gap magnetic field is eliminated, and the AC losses of the windings and eddy current losses of the magnets during the high-speed operation of the motor are reduced, and thus the applicability of the motor is greatly expanded.

Although the present disclosure has been disclosed above, the present disclosure is not limited thereto. Any changes and modifications may be made by those skilled in the art without departing from the scope of the present disclosure, and the scope of the present disclosure should be determined by the appended claims.

## Claims

1. A method for forming a rotor structure, comprising:
providing a plurality of magnet units, wherein each of the plurality of magnet units comprises a magnet component having a plurality of tooth portions; and
dividing an ideal sinusoidal air-gap magnetic field wave into N segments, wherein when a center line of a tooth portion of the plurality of tooth portions is in a corresponding segment of the ideal sinusoidal air-gap magnetic field wave, an area of the tooth portion is equal to an area of the corresponding segment of the ideal sinusoidal air gap magnetic field wave.

2. The method according to claim 1, wherein the magnet component further comprises a plurality of grooves respectively arranged between two adj acent tooth portions, and the plurality of grooves are symmetrically arranged relative to an axis d of a rotor.

3. The method according to claim 1, wherein a width of the tooth portion decreases as a distance between the tooth portion and an axis d of a rotor increases in a circumferential direction of the rotor.

4. The method according to claim 2, wherein the magnet component further comprises a yoke portion, and one end of each of the plurality of tooth portions is connected with the yoke portion.

5. The method according to claim 4, wherein when a center line of a groove of the plurality of grooves is in a corresponding segment of the ideal sinusoidal air-gap magnetic field wave, a sum of the area of the tooth portion and an area of a corresponding portion of the yoke portion is equal to the area of the corresponding segment of the ideal sinusoidal air gap magnetic field wave.

6. The method according to claim 1, wherein N is equal to a number of the plurality of tooth portions.

7. A rotor structure, wherein the rotor structure is formed by the method according to any one of claims 1 to 6.

8. The rotor structure according to claim 7, further comprising a rotor punching sheet, wherein the plurality of magnet units are arranged on the rotor punching sheet.

9. The rotor structure according to claim 7, wherein the magnet component is a line-shaped magnet component or a V-shaped magnet component.

10. A motor structure, comprising the rotor structure according to any one of claims 7 to 9.
